(19) Europäisches Patentamt / European Patent Office / Office européen des brevets

(11) **EP 4 521 479 A1**

(12) **EUROPEAN PATENT APPLICATION**

(43) Date of publication:
**12.03.2025 Bulletin 2025/11**

(21) Application number: **24196090.5**

(22) Date of filing: **23.08.2024**

(51) International Patent Classification (IPC):
$H01M\ 4/04^{(2006.01)}$    $C01B\ 25/00^{(2006.01)}$
$C01B\ 25/30^{(2006.01)}$    $C01B\ 25/37^{(2006.01)}$
$C01D\ 15/00^{(2006.01)}$    $C01G\ 49/00^{(2006.01)}$
$H01M\ 4/136^{(2010.01)}$    $H01M\ 4/36^{(2006.01)}$
$H01M\ 4/58^{(2010.01)}$    $H01M\ 4/62^{(2006.01)}$
$H01M\ 10/0525^{(2010.01)}$    $H01M\ 4/02^{(2006.01)}$

(52) Cooperative Patent Classification (CPC):
**H01M 4/366; C01B 25/45; H01M 4/0471;**
**H01M 4/136; H01M 4/5825; H01M 4/625;**
**H01M 10/0525;** C01P 2004/61; C01P 2004/62;
C01P 2006/90; H01M 2004/021; H01M 2004/028;
Y02E 60/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **28.08.2023 CN 202311086956**

(71) Applicant: **Eve Power Co., Ltd.**
**Jingmen, Hubei 448000 (CN)**

(72) Inventors:
• **YI, Jingyu**
  **Hubei, China, 448000 (CN)**
• **HUANG, Xin**
  **Hubei, China, 448000 (CN)**
• **LI, Yang**
  **Hubei, China, 448000 (CN)**
• **ZHU, Weihua**
  **Hubei, China, 448000 (CN)**
• **WEI, Haitao**
  **Hubei, China, 448000 (CN)**

(74) Representative: **Herrero & Asociados, S.L.**
**Edificio Aqua - Agustín de Foxá, 4-10**
**28036 Madrid (ES)**

(54) **LITHIUM MANGANESE IRON PHOSPHATE MODIFIED MATERIAL, AND POSITIVE ELECTRODE AND LITHIUM-ION BATTERY APPLYING THE SAME**

(57) A lithium manganese iron phosphate modified material, and a positive electrode and a lithium-ion battery applying the same. The lithium manganese iron phosphate modified material includes a nickel-cobalt-manganese material, a first carbon coating layer, a lithium manganese iron phosphate coating layer, and a second carbon coating layer. The nickel-cobalt-manganese material is externally coated with the first carbon coating layer, the lithium manganese iron phosphate coating layer, and the second carbon coating layer in turn. The lithium manganese iron phosphate coating layer includes a lithium manganese iron phosphate material, and a chemical formula of the lithium manganese iron phosphate material is $LiMn_{(1-a)}Fe_aPO_4$; $0.3 \le a \le 0.7$. A chemical formula of the nickel-cobalt-manganese material is $LiNi_xCo_yMn_{(1-x-y)}$; $0.5 \le x \le 0.8$ and $0 < x+y < l$.

EP 4 521 479 A1

**Description**

**TECHNICAL FIELD**

The present disclosure relates to the technical field of lithium-ion batteries, and more specifically to a lithium manganese iron phosphate modified material, and a positive electrode and a lithium-ion battery applying the same.

**BACKGROUND**

In recent years, along with the rapid development of new energy electric vehicles, the research and development (R&D) of power battery is also in full swing. At present, the energy density-oriented subsidy policy makes R&D focus on the development of high energy density battery materials. The issued the "Notice of Consultation with Enterprises on the 'Letter on the Proposal to Suspend the Use of Lithium-ion Batteries Powered by Semiconductor Materials in Commercial Vehicles'" in China fully expresses the concern about the safety of ternary material, which is known for its high specific capacity. Although the material represented by lithium iron phosphate is structurally stable, and the battery applying the same has good safety, the lower specific energy of lithium iron phosphate leads to lithium iron phosphate batteries for passenger vehicles with a shorter range, which is not able to meet the people's needs of travel. Therefore, the search for a new type of lithium battery material that can take into account the high energy density and high safety is an urgent problem to be solved.

Like lithium iron phosphate, lithium manganese iron phosphate also belongs to the olivine structure. The tetrahedral phosphate of lithium manganese iron phosphate is very stable and can play the role of structural support during the charging and discharging process, which makes the lithium manganese iron phosphate material have excellent thermodynamic and kinetic stability. Comparing to the performance of conventional commercial positive electrode materials for power batteries, it can be seen that lithium manganese iron phosphate has similar safety as lithium iron phosphate. However, the voltage plateau (4.1V) of lithium manganese iron phosphate is 0.7V higher than that of lithium iron phosphate. Lithium manganese iron phosphate can increase the energy density of the battery by 20%, provided that all other battery designs are the same. Lithium manganese iron phosphate has a similar voltage plateau to lithium manganate, but lithium manganese iron phosphate has a higher energy density and better high temperature cycle life. Although lithium manganese iron phosphate has similar energy density compared with ternary materials, lithium manganese iron phosphate is safer and cheaper.

In order to fully utilize the low-cost advantage of lithium manganese iron phosphate material and improve its power performance and cycling performance, the existing method is mainly to modify lithium manganese iron phosphate material by doping it with other metal ions to improve its electrochemical activity, and the composite use of lithium manganese iron phosphate and other positive electrode materials can complement one another's strengths and make up for weaknesses and produce synergistic effect on the performance. However, when lithium manganese iron phosphate and nickel cobalt manganese materials are mixed in the pulping process, it is easy to cause the viscosity of the slurry to change too fast, uneven dispersion, and difficult coating, and other problems. In order to solve the above problems, many researchers have adopted the method of double-layer or even multi-layer coating, which undoubtedly greatly increases the manufacturing cost and leads to that the coating surface density and coating uniformity is difficult to control.

**SUMMARY OF THE DISCLOSURE**

In order to improve the viscosity stability of the slurry viscosity of the lithium manganese iron phosphate modified material, the present disclosure provides a lithium manganese iron phosphate modified material, and a positive electrode and a lithium-ion battery applying the same.

In a first aspect, the present disclosure provides a lithium manganese iron phosphate modified material, including a nickel-cobalt-manganese material, a first carbon coating layer, a lithium manganese iron phosphate coating layer, and a second carbon coating layer; the nickel-cobalt-manganese material is externally coated with the first carbon coating layer, the lithium manganese iron phosphate coating layer, and the second carbon coating layer in turn; the lithium manganese iron phosphate coating layer includes a lithium manganese iron phosphate material, and a chemical formula of the lithium manganese iron phosphate material is $LiMn_{(1-a)}Fe_aPO_4$, $0.3 \leq a \leq 0.7$; a chemical formula of the nickel-cobalt-manganese material is $LiNi_xCo_yMn_{(1-x-y)}$, $0.5 \leq x \leq 0.8$ and $0 < x+y < 1$.

The lithium manganese iron phosphate modified material provided by the present disclosure is capable of enhancing the viscosity stability, high temperature stability, and cycling performance of the lithium manganese iron phosphate modified material through the respective coating of the first carbon coating layer and the second carbon coating layer. The coating of the first carbon coating layer can protect the nickel-cobalt-manganese material to avoid the structural damage of the lithium manganese iron phosphate modified material due to the volume expansion of the nickel-cobalt-manganese material during the charging and discharging process; and the coating of the second carbon coating layer can protect the lithium manganese iron phosphate material to mitigate the problem of manganese leaching out of the lithium manganese iron phosphate material at high temperatures, and can further protect the nickel-cobalt-manganese material to avoid excessive attenuation of the nickel-cobalt-manganese material during the cycling process. As a result, the modified lithium manganese iron phosphate material provided by the present disclosure has good viscosity stability, high temperature stability, and cycling performance.

In some embodiments, a particle size of the nickel-cobalt-manganese material is 1000-1500 nm.

In some embodiments, a particle size of the lithium manganese iron phosphate modified material is 1100-1900 nm. The appropriately sized lithium manganese iron phosphate modified material enables the electrolyte to sufficiently wet the lithium manganese iron phosphate modified material and shorten the lithium ion transfer path in the material, thereby accelerating the lithium ion migration rate and enhancing the multiplicity performance of the lithium manganese iron phosphate modified material.

In some embodiments, a carbon content of the lithium manganese iron phosphate modified material is 0.5-3% by mass. In the lithium manganese iron phosphate modified material, the carbon coating layer has the following functions: the carbon coating layer can protect the lithium manganese iron phosphate material and reduce the leaching out of ferromanganese; the carbon coating layer provides a conductive layer, which provides a channel for the electron transmission; the carbon coating layer increases the specific surface area, which provides a channel for the ion transmission; the carbon coating layer isolates the lithium manganese iron phosphate material from the nickel-cobalt-manganese material and avoids the two phases from contacting each other directly, which can prevent the interface problem. Therefore, the proper carbon content in the modified lithium manganese iron phosphate material can further improve the conductive and protective effects of the carbon coating layer.

In some embodiments, the lithium manganese iron phosphate modified material is prepared by a method including: S1: mixing a carbon source for providing the first carbon coating layer with the nickel-cobalt-manganese material, and carrying out a first high-temperature treatment to coat the first carbon coating layer on a surface of the nickel-cobalt-manganese material; and obtaining a nickel-cobalt-manganese composite material; S2: mixing a phosphorus source, an iron source, a manganese source, a lithium source, a surfactant, and the nickel-cobalt-manganese composite material under an inert gas atmosphere to form the lithium manganese iron phosphate coating layer on a surface of the nickel-cobalt-manganese composite material by a hydrothermal reaction; and obtaining a lithium manganese-iron phosphate precursor; and S3: mixing the lithium manganese iron phosphate precursor with a carbon source for forming the second carbon coating layer, and carrying out a second high-temperature treatment to form the second carbon coating layer on a surface of the lithium manganese iron phosphate coating layer; and obtaining the lithium manganese iron phosphate modified material. By virtue of this preparation method, the present disclosure may realize that the lithium manganese iron phosphate material grows uniformly on the surface of the nickel-cobalt-manganese composite material, resulting in high stability of the resulting lithium manganese iron phosphate modified material.

In some embodiments, the step of preparing the nickel-cobalt-manganese material by the hydrothermal reaction is as follows: mixing a nickel source, a cobalt source, a manganese source, a lithium source, a complexing agent, and a surfactant, and carrying out the hydrothermal reaction at 150-170°C for 6~8 h.

In some embodiments, the raw materials for preparing the nickel-cobalt-manganese material include 0.07-0.09 mol of nickel source, 0.005-0.012 mol of manganese source, 0.005-0.012 mol of cobalt source, 0.08-0.15 mol of lithium source, 0.1-0.2 mol of a complexing agent, and 0.01-0.04 mol of surfactant, in terms of amount of substance.

In some embodiments, the nickel source includes at least one of nickel sulfate, nickel chloride, and nickel nitrate.

In some embodiments, the cobalt source includes at least one of cobalt sulfate, cobalt chloride, and cobalt nitrate.

In some embodiments, the manganese source includes at least one of manganese sulfate, manganese chloride, manganese nitrate, manganese phosphate.

In some embodiments, the lithium source includes at least one of lithium hydroxide, lithium carbonate, and lithium phosphate.

In some embodiments, the complexing agent includes at least one of urea, sodium hydroxide, sodium carbonate, ammonia, and ammonium oxalate.

In some embodiments, the carbon source providing the first carbon coating includes at least one of glucose, starch, sucrose, carboxymethyl cellulose.

In some embodiments, in S1, after the nickel-cobalt-manganese material is annealed at 600-700°C for 2-3 hours in an air atmosphere, the carbon source is mixed with the nickel-cobalt-manganese material and then subjected to the first high-temperature treatment to obtain the nickel-cobalt-manganese composite material.

In some embodiments, in S1, the first high-temperature treatment is an annealing treatment at 750-850°C for 4-6 hours under an inert gas atmosphere.

In some embodiments, the step of preparing the lithium manganese iron phosphate precursor by the hydrothermal reaction is as follows: mixing a phosphorus source, an iron source, a manganese source, a lithium source, a surfactant, and the nickel-cobalt-manganese composite material, adding ethanol and introducing an inert gas for stirring for 10~30 minutes, and carrying out the hydrothermally reaction for 4-6 hours at 110-120°C, so as to obtain the lithium manganese iron phosphate precursor.

In some embodiments, the raw materials for preparing the lithium manganese iron phosphate precursor include 0.2-0.4 mol of phosphorus source, 0.1-0.15 mol of iron source, 0.1-0.15 mol of manganese source, 0.2-0.3 mol of lithium source, 0.01-0.04 mol of surfactant, and 0.05-0.12 mol of nickel-cobalt-manganese composite material, in terms of amount of substance.

In some embodiments, the phosphorus source includes at least one of diammonium hydrogen phosphate, ammonium dihydrogen phosphate.

In some embodiments, the iron source includes at least one of iron phosphate, ferrous sulfate.

In some embodiments, in S2, the surfactant is ammonium fluoride.

In some embodiments, the carbon source providing the second carbon coating layer includes at least one of glucose, starch, sucrose, carboxymethyl cellulose.

In some embodiments, in S3, the second high-temperature treatment is an annealing treatment at 700-800°C for 7-9 hours under an inert gas atmosphere.

In a second aspect, the present disclosure provides a positive electrode, including a current collector and a positive electrode active coating arranged on a surface of the current collector; the positive electrode active coating includes the lithium manganese iron phosphate modified material as above.

In a third aspect, the present disclosure provides a lithium-ion battery, including the positive electrode as above.

## DETAILED DESCRIPTION

In order to enable those in the art to better understand the technical solutions in the present disclosure, the technical solutions of the present disclosure will be described clearly and completely in the following in connection with the embodiments of the present disclosure, and it is obvious that the described embodiments are only a part of the embodiments of the present disclosure and not all of the embodiments. Based on the embodiments of the present disclosure, all other embodiments obtained by those skilled in the art without making creative labor shall fall within the scope of the present disclosure.

**Embodiment 1**

**Treatment group 1A**

1. Preparation of lithium manganese iron phosphate modified material

S1. 0.08 mol of nickel nitrate, 0.01 mol of manganese nitrate, 0.01 mol of cobalt nitrate, 0.15 mol of lithium carbonate, 0.15 mol of urea, and 0.02 mol of ammonium fluoride are mixed and stirred for 25 minutes, and the mixture is transferred to a hydrothermal kettle for carrying out a hydrothermal reaction for 420 minutes at 160°C to obtain a nickel-cobalt-manganese material; the nickel-cobalt-manganese material is then centrifuged and separated, dried, and ground into a powder with a particle size of 1000 nm, the ground nickel-cobalt-manganese material is annealed at 650°C for 3 h in an empty atmosphere, then the obtained nickel-cobalt-manganese material is ultrasonically infiltrated with a 0.01 mol/L glucose solution for 10 min and dried, and the obtained solid is annealed at 800°C for 5 h in a nitrogen atmosphere, so as to obtain a nickel-cobalt-manganese composite material;

S2. 0.25 mol of phosphorus, 0.15 mol of ferrous sulfate, 0.1 mol of manganese sulfate, 0.25 mol of lithium hydroxide, 0.02 mol of ammonium fluoride, and 0.1 mol of the nickel-cobalt-manganese composite material are mixed together with 80 mL of ethanol, protected by nitrogen gas, and then dissolved and dispersed with sealed stirring for 20 minutes; the suspension is transferred to a hydrothermal kettle and the temperature is raised to 115°C for a hydrothermal reaction for 300 minutes; after the hydrothermal reaction is completed, the suspension is centrifuged and separated to obtain a solid as a lithium manganese iron phosphate precursor;

S3. the lithium manganese iron phosphate precursor is dried and ground into a powder with a particle size of 1500nm, and the obtained lithium manganese iron phosphate precursor is ultrasonically infiltrated in 0.1mol/L glucose solution for 30 minutes, dried, and placed in an annealing process in an inert atmosphere at 750°C for 480 minutes to obtain a lithium manganese iron phosphate modified material.

2. Preparation of lithium-ion battery

(1) Preparation of positive electrode: the lithium manganese iron phosphate modified material, SP, CNT, and PVDF are mixed in a mass ratio of 96:1.8:1.5:0.7, and NMP is adopted as solvent to obtain a positive electrode slurry. The positive electrode slurry is uniformly coated on a 12 μm charcoal-coated aluminum foil and dried at 90°C to produce the dried positive electrode.

(2) Preparation of negative electrode: artificial graphite, SP, CMC, and SBR are mixed in the mass ratio of 95.5:2:0.5:2, and deionized water is adopted as solvent to obtain a negative electrode slurry. The negative electrode slurry is coated on a 8μm copper foil and dried under vacuum at 100°C.

(3) Preparation of electrolyte for lithium-ion battery: the electrolyte is prepared in a glove box filled with argon gas, in which the water content is less than 10 ppm and the oxygen content is less than 1 ppm. The preparation of the electrolyte includes the following steps: configuring an electrolyte of 1.2 mol/L lithium hexafluorophosphate ($LiPF_6$) and lithium bis(fluorosulfonyl)imide (LFSI) at a volume ratio of ethylene carbonate (EC), dimethyl carbonate (DMC), and diethyl carbonate (DEC) = 30:40:30, where the mass ratio is calculated to be $LiPF_6$:LFSI = 1.1:0.1, adding 0.5 wt.% of vinylene carbonate (VC), 1.5 wt.% of fluorinated ethylene carbonate (FEC), 0.5% of 1,3,2-dioxathiolane 2,2-dioxide (DTD), and 0.5% of lithium difluorophosphate ($LiPO_2F_2$) as an additive, and mixing homogeneously for use.

(4) Lithium-ion battery assembly: the vacuum-dried positive and negative electrodes and a diaphragm are punched, and then assembled into a CR2032 button battery in a glove box filled with argon gas.

**Treatment group 2A**

In this treatment group, a lithium manganese iron phosphate modified material is prepared with reference to the formula and method provided in the treatment group 1A of Embodiment 1, and the difference between this treatment group and the treatment group 1A is that in the preparation of the lithium manganese iron phosphate modified material of this treatment group, the 0.01 mol/L glucose solution is replaced with a 0.01 mol/L starch solution in S1 and S3. In addition to the above difference, the procedure for the preparation of the lithium manganese iron phosphate modified material and the lithium-ion battery in this treatment group is strictly the same as that in treatment group 1A of Embodiment 1.

**Comparison group 1A**

In this comparison group, a lithium manganese iron phosphate modified material is prepared with reference to the formula and method provided in the treatment group 1A of Embodiment 1, and the difference between this comparison group and treatment group 1A is that this comparison group does not include the step of carbon coating on the nickel-cobalt-manganese material in S1 when preparing the lithium manganese iron phosphate modified material. In addition to the above difference, the procedure for the preparation of the lithium manganese iron phosphate modified material and the lithium-ion battery in this treatment group is strictly the same as that in treatment group 1A of Embodiment 1. Specifically, the steps for preparing the lithium manganese iron phosphate modified material in this comparison group are as follows:

S1. 0.08 mol of nickel nitrate, 0.01 mol of manganese nitrate, 0.01 mol of cobalt nitrate, 0.15 mol of lithium carbonate, 0.15 mol of urea, and 0.02 mol of ammonium fluoride are mixed and stirred for 25 minutes, and the mixture is transferred to a hydrothermal kettle for carrying out a hydrothermal reaction for 420 minutes at 160°C, then centrifuged and separated, dried, and ground into a powder, the ground nickel-cobalt-manganese material is annealed at 650°C for 3 h in an empty atmosphere, and the obtained solid is annealed at 800°C for 5 h in a nitrogen atmosphere, so as to obtain a nickel-cobalt-manganese material;
S2, S3. strictly consistent with the treatment group 1A of Embodiment 1.

**Comparison Group 2A**

In this comparison group, a lithium manganese iron phosphate modified material is prepared with reference to the formula and method provided in the treatment group 1A of Embodiment 1, and the difference between this comparison group and the treatment group 1A is that this comparison group does not include the step of carbon coating on the lithium manganese iron phosphate precursor in S3 when preparing the lithium manganese iron phosphate modified material. In addition to the above difference, the procedure for the preparation of the lithium manganese iron phosphate modified material and the lithium-ion battery in this treatment group is strictly the same as that in treatment group 1A of Embodiment 1. Specifically, the steps for preparing the lithium manganese iron phosphate modified material in this comparison group are as follows:

S1, S2. strictly consistent with the treatment group 1A of Embodiment 1;
S3. the lithium manganese iron phosphate precursor is dried and ground into a powder, and the obtained lithium manganese iron phosphate precursor is placed in an annealing process in an inert atmosphere at 750°C for 480 minutes to obtain a lithium manganese iron phosphate modified material.

**Comparison Group 3A**

In this treatment group, a lithium manganese iron phosphate modified material is prepared with reference to the formula and method provided in the treatment group 1A of Embodiment 1, and the difference between this comparison group and the treatment group 1A is that in the preparation of the lithium manganese iron phosphate modified material of this treatment group, the lithium manganese iron phosphate material and nickel-cobalt-manganese material are respectively prepared by hydrothermal reaction, and the lithium manganese iron phosphate material and nickel-cobalt-manganese material are respectively subjected to carbon coating by high-temperature reaction, and finally, the lithium manganese iron phosphate composite material and the nickel-cobalt-manganese composite material are physically mixed in the process of slurry preparation. In addition to the above difference, the procedure for the preparation of the lithium manganese iron phosphate modified material and the lithium-ion battery in this treatment group is strictly the same as that in treatment group 1A of Embodiment 1. Specifically, the steps for preparing the lithium manganese iron phosphate modified material in this comparison group are as follows:

S1. strictly consistent with the treatment group 1A of Embodiment 1;

S2. 0.15 mol of ferrous sulfate, 0.1 mol of manganese sulfate, 0.25 mol of lithium hydroxide, and 0.02 mol of ammonium fluoride are mixed together with 80 mL of ethanol, protected by nitrogen gas, and then dissolved and dispersed with sealed stirring for 20 minutes; the suspension is transferred to a hydrothermal kettle, and the temperature is raised to 115°C for a hydrothermal reaction for 300 minutes; after the hydrothermal reaction is completed, the suspension is centrifuged and separated, the solid is dried and ground into powder, then the solid is ultrasonically infiltrated in 0.1 mol/L glucose solution for 30 minutes and dried, and then the solid is placed in an annealing treatment in an inert atmosphere at 750°C for 480 minutes to obtain a lithium manganese iron phosphate modified material.

Preparation of positive electrode slurry: the lithium manganese iron phosphate composite, the nickel-cobalt-manganese composite material, SP, CNT, and PVDF are mixed and stirred in a mass ratio of 76.8:19.2:1.8:1.5:0.7, and NMP is adopted as solvent to obtain a positive electrode slurry.

**Comparison Group 4A**

In this comparison group, a lithium manganese iron phosphate modified material is prepared with reference to the formula and method provided in the treatment group 1A of Embodiment 1, and the difference between this comparison group and treatment group 1A is that in the preparation of the lithium manganese iron phosphate modified material of this treatment group, the lithium manganese iron phosphate material and the nickel-cobalt-manganese material are prepared by hydrothermal reaction and high temperature reaction, respectively, and finally, the lithium manganese iron phosphate composite material and the nickel-cobalt-manganese composite material are physically mixed in the process of slurry preparation. In addition to the above difference, the procedure for the preparation of the lithium manganese iron phosphate modified material and the lithium-ion battery in this treatment group is strictly the same as that in treatment group 1A of Embodiment 1. Specifically, the steps for preparing the lithium manganese iron phosphate modified material in this comparison group are as follows:

S1. 0.08 mol of nickel nitrate, 0.01 mol of manganese nitrate, 0.01 mol of cobalt nitrate, 0.15 mol of lithium carbonate, 0.15 mol of urea, and 0.02 mol of ammonium fluoride are mixed and stirred for 25 minutes, and the mixture is transferred to a hydrothermal kettle for carrying out a hydrothermal reaction for 420 minutes at 160°C, and the resulting material is centrifuged and separated, dried, and ground. The ground nickel-cobalt-manganese material is annealed at 650°C for 3 hours in an empty atmosphere, and the nickel-cobalt-manganese material is annealed at 800°C for 5 hours in a nitrogen atmosphere with sufficient nitrogen;

S2. 0.15 mol of ferrous sulfate, 0.1 mol of manganese sulfate, 0.25 mol of lithium hydroxide, and 0.02 mol of ammonium fluoride are mixed together with 80 mL of ethanol, protected with nitrogen gas, and then dissolved and dispersed with sealed stirring for 20 minutes; the suspension is transferred to a hydrothermal kettle and the temperature is raised to 115°C for a hydrothermal reaction for 300 minutes; after the hydrothermal reaction is completed, the suspension is centrifuged and separated, the obtained solid is dried and ground into powder, and then the obtained solid is placed in an annealing process in an inert atmosphere at 750°C for 480 minutes to obtain a lithium manganese iron phosphate material.

Preparation of positive electrode slurry: the lithium manganese iron phosphate material, the nickel-cobalt-manganese material, SP, CNT, and PVDF are mixed and stirred in a mass ratio of 76.8:19.2:1.8:1.5:0.7, and NMP is adopted as solvent to obtain a positive electrode slurry.

**Test example 1**

1. Test objects

The positive electrode slurry and lithium-ion battery produced by the treatment groups and the comparison groups in Embodiment 1.

2. Test methods

(1) Viscosity test of positive electrode slurry: a viscometer is applied to monitor the viscosity of the positive electrode slurry for 12 hours.

(2) High-temperature storage performance: the lithium-ion battery is charged at constant current with 0.5C (nominal capacity) to a voltage of 4.25V at room temperature, and then charged at a constant voltage of 4.25V to a current of ≤0.05C; an initial volume and an initial discharging capacity of the cell are measured; the battery is stored in a constant temperature box at 60°C for 30 days, the final volume of the cell is measured, and a retention capacity and a recovery capacity of the battery are measured after it has been discharged at 0.5C to 2.5V The high-temperature battery capacity retention rate is calculated according to equation ①, and the high-temperature battery capacity loss rate is calculated according to equation ②.

$$\mathrm{High-temperature\ battery\ capacity\ retention\ rate\ (\%)} = \frac{\text{retention capacity}}{\text{initial capacity}} \times 100\% \quad ①$$

$$\mathrm{High-temperature\ battery\ capacity\ loss\ rate\ (\%)} = 1 - (\frac{\text{retention capacity}}{\text{initial capacity}} \times 100\%) \quad ②$$

(3) Cycling performance test: after the prepared lithium-ion battery is left at 25°C for 1 hour, charge/discharge cycling performance test is carried out at 3C multiplication rate, with charge/discharge voltage ranging from 2.5V to 4.25V, and the cycling capacity retention rate, DCIR growth rate, and charging constant current ratio are measured.

3. Test results and analysis

The test results of this test example are shown in Table 1, in which the influence of carbon coating on the lithium manganese iron phosphate modified material and the lithium-ion battery applying the material is mainly explored. In comparison group 1A, in the lithium manganese iron phosphate modified material, the nickel-cobalt-manganese material is not multilayer coated, which leads to a sharp decrease in the cycle capacity of the lithium-ion battery in the charging and discharging process. In comparison group 2A, in the lithium manganese iron phosphate modified material, the lithium manganese iron phosphate precursor is not carbon coated, resulting in the lithium manganese iron phosphate material being exposed, which leads to a significant decrease in the high-temperature storage performance of the lithium-ion battery, because the carbon coating on the lithium manganese iron phosphate can effectively mitigate the problem of manganese leaching out of the lithium manganese iron phosphate material. In comparison group 3A, the lithium manganese iron phosphate composite material and nickel-cobalt-manganese composite material are prepared by hydrothermal reaction and high temperature treatment respectively, and physically mixed in the preparation of positive electrode slurry, and it can be found that even if both of them are carbon coated, the viscosity of positive electrode slurry still varies greatly. In addition, in comparison group 4A, the lithium manganese iron phosphate and nickel cobalt manganese materials without carbon coating are prepared by hydrothermal reaction and high temperature treatment, respectively, and physically mixed in the preparation of positive electrode slurry, and it can be seen from the test results that the change of positive electrode slurry is greater compared with that of comparison group 3A. Therefore, it can be shown by comparison groups 3A-4A that the lithium manganese iron phosphate modified material provided by the present disclosure is capable of mitigating the problem of abnormal viscosity of the slurry after mixing lithium manganese iron phosphate and nickel cobalt in the related art.

In the treatment group 1A-2A, the effects of different carbon sources on the produced lithium manganese iron phosphate modified material are compared. It can be found from the test results that the viscosity stability of the positive electrode slurry, high-temperature storage stability, and cycling performance measured in the treatment group 1A are superior to that of the lithium manganese iron phosphate modified material and lithium-ion battery in the treatment group 2A. Therefore, it can be confirmed by this test example that the lithium manganese iron phosphate modified material provided by the present disclosure can not only effectively improve the viscosity stability of the positive electrode slurry, improve the high temperature stability of the lithium manganese iron phosphate modified material, but also effectively slow down the decay rate of the nickel-cobalt-manganese material in the lithium manganese iron phosphate modified material.

Table 1. Test results of test example 1

| Group | Viscosity of positive electrode slurry /mPa·s | | | High-temperature storage stability | | Cycling capacity retention rate | DCIR growth rate | Charging constant current ratio |
|---|---|---|---|---|---|---|---|---|
| | 0h | 6h | 12h | Capacity retention rate | Capacity loss rate | | | |
| Treatment group 1A | 5500 | 40000 | 49000 | 97.2% | 2.8% | 95.86% | 3% | 79% |
| Treatment group 2A | 6000 | 50000 | 60000 | 96.6% | 3.4% | 95.66% | 3.8% | 77.5% |
| Comparison group 1A | 6200 | 55000 | 65000 | 96.8% | 3.2% | 94.8% | 4.5% | 77% |
| Comparison group 2A | 5500 | 60000 | 72000 | 94.2% | 5.8% | 92.07% | 6% | 76% |
| Comparison group 3A | 6500 | 120000 | 180000 | 94.9% | 5.1% | 89.21% | 8% | 71% |
| Comparison group 4A | 8000 | 150000 | 240000 | 90% | 10% | 85% | 14% | 68% |

**Embodiment 2**

**Treatment group 1B**

In this treatment group, a lithium manganese iron phosphate modified material and a lithium-ion battery are prepared with reference to the formula and method provided in the treatment group 1A of Embodiment 2.

**Treatment group 2B**

In this comparison group, a lithium manganese iron phosphate modified material is prepared with reference to the formula and method provided in the treatment group 1B of Embodiment 2, and the difference between this comparison group and treatment group 1B is that this treatment group does not does not include the step of annealing on the nickel-cobalt-manganese material in S1 when preparing the lithium manganese iron phosphate modified material, instead, mixing the nickel-cobalt-manganese material with the carbon source directly and undergoing a first high-temperature treatment. In addition to the above difference, the procedure for the preparation of the lithium manganese iron phosphate modified material and the lithium-ion battery in this treatment group is strictly the same as that in treatment group 1B of Embodiment 2. Specifically, the steps for preparing the lithium manganese iron phosphate modified material and the lithium-ion battery in this comparison group are as follows:

S1. 0.08 mol of nickel nitrate, 0.01 mol of manganese nitrate, 0.01 mol of cobalt nitrate, 0.15 mol of lithium carbonate, 0.15 mol of urea, and 0.02 mol of ammonium fluoride are mixed and stirred for 25 minutes, and then the mixture is transferred to a hydrothermal kettle for carrying out a hydrothermal reaction at 160°C for 420 minutes to obtain a nickel-cobalt-manganese material; the nickel-cobalt-manganese material is then centrifuged and separated, dried, and ground into a powder; the ground nickel-cobalt-manganese material is ultrasonically infiltrated with a 0.01 mol/L glucose solution for 10 minutes and dried, and the obtained solid is annealed at 800°C for 5 h in a nitrogen atmosphere, so as to obtain a nickel-cobalt-manganese composite material;
S2, S3. strictly consistent with the treatment group 1B of Embodiment 2.

### Treatment group 3B

In this comparison group, a lithium manganese iron phosphate modified material is prepared with reference to the formula and method provided in the treatment group 1B of Embodiment 2, and the difference between this comparison group and treatment group 1B is that this treatment group does not does not include the step of milling on the nickel-cobalt-manganese material in S1 when preparing the lithium manganese iron phosphate modified material. In addition to the above difference, the procedure for the preparation of the lithium manganese iron phosphate modified material and the lithium-ion battery in this treatment group is strictly the same as that in treatment group 1B of Embodiment 2. Specifically, the steps for preparing the lithium manganese iron phosphate modified material and the lithium-ion battery in this comparison group are as follows:

S1. 0.08 mol of nickel nitrate, 0.01 mol of manganese nitrate, 0.01 mol of cobalt nitrate, 0.15 mol of lithium carbonate, 0.15 mol of urea, and 0.02 mol of ammonium fluoride are mixed and stirred for 25 minutes, and then the mixture is transferred to a hydrothermal kettle for carrying out a hydrothermal reaction at 160°C for 420 minutes to obtain a nickel-cobalt-manganese material; after the nickel-cobalt-manganese material is centrifuged and separated and dried, the nickel-cobalt-manganese material is subjected to annealing treatment at 650°C for 3 h in an empty atmosphere, then the nickel-cobalt-manganese material is ultrasonically infiltrated with a 0.01 mol/L glucose solution for 10 min and dried, and the obtained solid is annealed at 800°C for 5 h in a nitrogen atmosphere, so as to obtain a nickel-cobalt-manganese composite material;

S2, S3. strictly consistent with the treatment group 1B of Embodiment 2.

### Treatment group 4B

In this comparison group, a lithium manganese iron phosphate modified material is prepared with reference to the formula and method provided in the treatment group 1B of Embodiment 2, and the difference between this comparison group and treatment group 1B is that the hydrothermal reaction is carried out in an air atmosphere in S2 when preparing the lithium manganese iron phosphate modified material. In addition to the above difference, the procedure for the preparation of the lithium manganese iron phosphate modified material and the lithium-ion battery in this treatment group is strictly the same as that in treatment group 1B of Embodiment 2. Specifically, the steps for preparing the lithium manganese iron phosphate modified material and the lithium-ion battery in this comparison group are as follows:

S1. strictly consistent with the treatment group 1B of Embodiment 2;

S2. 0.15 mol of ferrous sulfate, 0.1 mol of manganese sulfate, 0.25 mol of lithium hydroxide, 0.02 mol of ammonium fluoride, and 0.1 mol of nickel-cobalt-manganese composite material are mixed together with 80 mL of ethanol, and then dissolved and dispersed with sealed stirring for 20 minutes; the suspension is transferred to a hydrothermal kettle and the temperature is raised to 115°C for a hydrothermal reaction for 300 minutes; after the hydrothermal reaction is completed, the suspension is centrifuged and separated to obtain a solid as a lithium manganese iron phosphate precursor;

S3. strictly consistent with the treatment group 1B of Embodiment 2.

### Test example 2

1. Test objects

The positive electrode slurry and lithium-ion battery produced by the treatment groups and the comparison groups in Embodiment 2.

2. Test methods

The experiments in this test example are conducted with reference to the test method in the test example 1.

3. Test results and analysis

The test results of this test example are shown in Table 2, in which the influence of the preparation method of lithium manganese iron phosphate on the lithium manganese iron phosphate modified material and the lithium-ion battery applying the material is mainly explored.

In treatment group 2B, the nickel manganese cobalt manganese material is mixed with carbon source directly and then subjected to the first high-temperature treatment without annealing the nickel manganese cobalt manganese material in S1 in the preparation of the lithium manganese iron phosphate modified material. As a result, the structural stability of the nickel-cobalt-manganese composite material in the lithium manganese iron phosphate modified material in treatment group 2B is reduced, which in turn causes a decline in the cycling capacity retention rate of the corresponding lithium-ion battery.

In treatment group 3B, due to the fact that the nickel-cobalt-manganese material is not ground in S1 when preparing the lithium manganese iron phosphate modified material, the nickel-cobalt-manganese material in the lithium manganese iron phosphate modified material produced in treatment group 3B has a non-uniform granularity, which results in an increase in the DCIR growth rate of the lithium-ion battery produced, and a decrease in the charging constant current ratio.

In treatment group 4B, when preparing the lithium manganese iron phosphate modified material, the hydrothermal reaction in S2 is carried out under an air atmosphere, resulting in a decrease in the stability of the synergistic effect between the lithium manganese iron phosphate material and the nickel-cobalt-manganese composite material in the lithium manganese iron phosphate modified material produced in treatment group 4B, which in turn caused a decrease in the viscosity stability of the corresponding positive electrode slurry and a decrease in the high temperature storage performance of the lithium-ion battery.

Table 2. Test results of test example 2

| Group | Viscosity of positive electrode slurry /mPa·s | | | High-temperature storage stability | | Cycling capacity retention rate | DCIR growth rate | Charging constant current ratio |
|---|---|---|---|---|---|---|---|---|
| | 0h | 6h | 12h | Capacity retention rate | Capacity loss rate | | | |
| Treatment group 1B | 5500 | 40000 | 49000 | 97.2% | 2.8% | 95.86% | 3% | 79% |
| Treatment group 2B | 5800 | 43000 | 51000 | 97% | 3% | 95.16% | 3.4% | 78.5% |
| Treatment group 3B | 5900 | 47000 | 57000 | 97.1% | 2.9% | 95.36% | 3.7% | 77.5% |
| Treatment group 4B | 6500 | 70000 | 150000 | 95.2% | 4.8% | 91.82% | 9% | 73% |

**Embodiment 3**

Based on the test results of test example 1, the method of carbon coating in the preparation of the lithium manganese iron phosphate modified material will have an effect on the lithium manganese iron phosphate modified material produced. The lithium manganese iron phosphate modified material produced by treatment group 1A of Embodiment 1 is the best, and the corresponding lithium battery has the best overall performance. Therefore, in this Embodiment 3, the treatment group 1C is set up in accordance with the treatment group 1A of Embodiment 1. In addition, treatment groups 1C-3C of Embodiment 3 are set with the surfactant material used in S2 in the preparation of the lithium manganese iron phosphate modified material as a variable, and the variables of treatment groups 1C-3C of Embodiment 3 are shown in Table 3. Moreover, the treatment groups 1C-3C of Embodiment 3 refers to the treatment group 1A of Embodiment 1 for the preparation of the lithium manganese iron phosphate modified material and the lithium-ion battery.

Table 3: Variables for preparation of silicon-carbon composite materials in treatment groups 1C-3C

| Group | Surfactant material used in S2 |
|---|---|
| Treatment group 1C | Ammonium fluoride |
| Treatment group 2C | Sodium fluoride |
| Treatment group 3C | Not used |

**Test Example 3**

1. Test objects

The positive electrode slurry and lithium-ion battery produced by the treatment groups in Embodiment 3.

10

2. Test methods

The experiments in this test example are conducted with reference to the test method in the test example 1.

3. Test results and analyses

The test results of this test example are shown in Table 4, in which the influence of surfactant materials when preparing lithium iron phosphate precursor on the lithium manganese iron phosphate modified material and the lithium-ion battery applying the material is mainly explored. By testing the lithium manganese iron phosphate modified materials and lithium-ion batteries corresponding to treatment groups 1C-3C, it can be found that the surfactant affects the growth of the lithium manganese iron phosphate material on the surface of the nickel-cobalt-manganese composite material, which in turn affects the stability of the lithium manganese iron phosphate modified materials produced by treatment groups 1C-3C. In particular, in treatment group 3C, when no surfactant is introduced and only deionized water is used as a substitute, the growth of the lithium manganese iron phosphate material on the surface of the nickel-cobalt-manganese composite material is not uniform, which in turn led to a decrease in the viscosity stability of the positive electrode slurry and the high-temperature storage performance of the lithium manganese iron phosphate modified material produced in treatment group 3C.

Table 4. Test results of test example 3

| Group | Viscosity of positive electrode slurry /mPa·s | | | High-temperature storage stability | | Cycling capacity retention rate | DCIR growth rate | Charging constant current ratio |
|---|---|---|---|---|---|---|---|---|
| | 0h | 6h | 12h | Capacity retention rate | Capacity loss rate | | | |
| Treatment group 1C | 5500 | 40000 | 49000 | 97.2% | 2.8% | 95.86% | 3% | 79% |
| Treatment group 2C | 6800 | 70000 | 100000 | 96.24% | 3.5% | 93.66% | 4.5% | 76.4% |
| Treatment group 3C | 7500 | 85000 | 130000 | 95.9% | 4.9% | 92.80% | 7% | 72.6% |

The above embodiments are only intended to illustrate the technical solutions of the present disclosure rather than to limit the scope of the present disclosure. Although the present disclosure has been described in detail with reference to the above embodiments, those skilled in the art should understand that the technical solutions of the present disclosure can be modified or equivalently replaced without departing from the substance and scope of the technical solutions of the present disclosure.

**Claims**

1. A lithium manganese iron phosphate modified material, **characterized by** comprising a nickel-cobalt-manganese material, a first carbon coating layer, a lithium manganese iron phosphate coating layer, and a second carbon coating layer;

   wherein the nickel-cobalt-manganese material is externally coated with the first carbon coating layer, the lithium manganese iron phosphate coating layer, and the second carbon coating layer in turn;
   the lithium manganese iron phosphate coating layer comprises a lithium manganese iron phosphate material, and a chemical formula of the lithium manganese iron phosphate material is $LiMn_{(1-a)}Fe_aPO_4$, wherein $0.3 \leq a \leq 0.7$;
   a chemical formula of the nickel-cobalt-manganese material is $LiNi_xCo_yMn_{(1-x-y)}$, wherein, $0.5 \leq x \leq 0.8$ and $0 < x+y < 1$.

2. The lithium manganese iron phosphate modified material according to claim 1, wherein a particle size of the nickel-cobalt-manganese material is 1000-1500 nm.

3. The lithium manganese iron phosphate modified material according to claim 2, wherein a particle size of the lithium manganese iron phosphate modified material is 1100-1900 nm.

4. The lithium manganese iron phosphate modified material according to claim 1, wherein a carbon content of the lithium manganese iron phosphate modified material is 0.5-3% by mass.

5. A preparation method for the lithium manganese iron phosphate modified material according to any one of claims 1-4, comprising:

S1: mixing a carbon source for providing the first carbon coating layer with the nickel-cobalt-manganese material, and carrying out a first high-temperature treatment to coat the first carbon coating layer on a surface of the nickel-cobalt-manganese material; and obtaining a nickel-cobalt-manganese composite material;

S2: mixing a phosphorus source, an iron source, a manganese source, a lithium source, a surfactant, and the nickel-cobalt-manganese composite material under an inert gas atmosphere to form the lithium manganese iron phosphate coating layer on a surface of the nickel-cobalt-manganese composite material by a hydrothermal reaction; and obtaining a lithium manganese-iron phosphate precursor; and

S3: mixing the lithium manganese iron phosphate precursor with a carbon source for forming the second carbon coating layer, and carrying out a second high-temperature treatment to form the second carbon coating layer on a surface of the lithium manganese iron phosphate coating layer; and obtaining the lithium manganese iron phosphate modified material.

6. The preparation method according to claim 5, wherein in S1, the first high-temperature treatment is an annealing treatment at 750-850°C for 4-6 hours under an inert gas atmosphere.

7. The preparation method according to claim 5, wherein in S2, the surfactant is ammonium fluoride.

8. The preparation method according to claim 5, wherein in S3, the second high-temperature treatment is an annealing treatment at 700-800°C for 7-9 hours under an inert gas atmosphere.

9. A positive electrode, comprising a current collector and a positive electrode active coating arranged on a surface of the current collector; wherein the positive electrode active coating comprises the lithium manganese iron phosphate modified material according to any one of claims 1 to 8.

10. A lithium-ion battery, comprising the positive electrode according to claim 9.

Europäisches
Patentamt

European
Patent Office

Office européen
des brevets

# EUROPEAN SEARCH REPORT

Application Number

EP 24 19 6090

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 220 763 A1 (GUANGDONG BRUNP RECYCLING TECHNOLOGY CO LTD [CN] ET AL.) 2 August 2023 (2023-08-02) * paragraphs [0033] - [0060] * ----- | 1-10 | INV. H01M4/04 C01B25/00 C01B25/30 C01B25/37 |
| X,P | EP 4 343 888 A1 (BYD CO LTD [CN]) 27 March 2024 (2024-03-27) * paragraph [0071] * | 1-10 | C01D15/00 C01G49/00 H01M4/136 |
| X | & CN 115 911 291 A (BYD CO LTD) 4 April 2023 (2023-04-04) * paragraph [0071] * ----- | 1-10 | H01M4/36 H01M4/58 H01M4/62 H01M10/0525 |
| Y | CN 113 764 619 A (XIAMEN HITHIUM NEW ENERGY TECHNOLOGY CO LTD) 7 December 2021 (2021-12-07) * paragraphs [0137] - [0139] * ----- | 1-10 | ADD. H01M4/02 |
| Y | CN 115 810 733 A (JIANGSU HANGYU CHAONENG LITHIUM BATTERY TECH CO LTD) 17 March 2023 (2023-03-17) * paragraph [0006] * ----- | 1-10 | |

**TECHNICAL FIELDS SEARCHED (IPC)**

H01M
C01B
C01D
C01G

The present search report has been drawn up for all claims

| Place of search | Date of completion of the search | Examiner |
|---|---|---|
| Munich | 14 January 2025 | Lavorenti, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 6090

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2025

| Patent document cited in search report | | Publication date | Patent family member(s) | | Publication date |
|---|---|---|---|---|---|
| EP 4220763 | A1 | 02-08-2023 | CN | 112289994 A | 29-01-2021 |
| | | | EP | 4220763 A1 | 02-08-2023 |
| | | | US | 2023264974 A1 | 24-08-2023 |
| | | | WO | 2022089204 A1 | 05-05-2022 |
| EP 4343888 | A1 | 27-03-2024 | CN | 115911291 A | 04-04-2023 |
| | | | EP | 4343888 A1 | 27-03-2024 |
| | | | JP | 2024531041 A | 29-08-2024 |
| | | | KR | 20240017067 A | 06-02-2024 |
| | | | US | 2024186490 A1 | 06-06-2024 |
| | | | WO | 2023046048 A1 | 30-03-2023 |
| CN 113764619 | A | 07-12-2021 | NONE | | |
| CN 115810733 | A | 17-03-2023 | NONE | | |

EPO FORM P0459

For more details about this annex : see Official Journal of the European Patent Office, No. 12/82